# EUROPEAN PATENT SPECIFICATION

(11) **EP 3 214 493 B1**
(45) Date of publication and mention of the grant of the patent: **01.04.2020**
(21) Application number: 15853756.3
(22) Date of filing: 21.05.2015
(51) Int. Cl.: G03B 17/14

(54) **LENS LIMITING ASSEMBLY, CAMERA BODY, AND CAMERA**
LINSENBEGRENZUNGSANORDNUNG, KAMERAGEHÄUSE UND KAMERA
ENSEMBLE DE LIMITATION DE LENTILLE, CORPS DE CAMÉRA ET CAMÉRA

(30) Priority: 27.10.2014 WO PCT/CN2014/089604
(43) Date of publication of application: 06.09.2017
(60) Divisional application: 20158592.4
(73) Proprietor: SZ DJI Technology Co., Ltd., Shenzhen, Guangdong 518057 (CN); JCD (Guangzhou) Optical Corporation Limited, Guangdong, Guangdong 510663 (CN)
(72) Inventor: YANG, Feihu, Shenzhen, Guangdong 518109 (CN); ZHU, Jianguo, Guangzhou, Guangdong 510663 (CN); HUANG, Yanxin, Shenzhen, Guangdong 518057 (CN)
(74) Representative: Appelt, Christian W.
(86) International application number: PCT/CN2015/079521
(87) International publication number: WO 2016/065893

(56) References cited:
- CN-A- 103 064 234
- CN-A- 103 365 043
- CN-A- 103 608 725
- CN-U- 203 250 100
- CN-U- 204 178 095
- CN-Y- 201 104 277
- GB-A- 2 241 068
- JP-A- 2014 157 248
- US-A- 4 659 203
- US-A1- 2008 075 454

## Description

### Technical Field

The present disclosure relates to a lens limiting assembly, a camera body comprising the lens limiting assembly, and a camera comprising said camera body.

### Background Art

A camera includes a lens and a body in a fixed or detachable connection. To ensure the stabilization of imaging, it is desired to keep the flange focal distance from the lens to an image sensor as precise as possible, so that the imaging will be stable and clear. The existing camera lens is assembled in such a way that the lens is rotatably mounted to a camera body and hooked by a lens assembly ring on the body, and then a lens release button assembly is additionally arranged at the lens assembly ring and inserted into the lens to prevent the lens from falling off.

In the above-mentioned way, since the lens can rotate, a gap of about 0.05 mm is generally present, but if the camera is used on a vibrating platform, it will lead to poor contact, or even a failure, between the contact at the back and the camera lens; and in addition, the lens may also have a slightly changed flange focal distance due to the gap. Designers have proposed to eliminate the above-mentioned gap using a spring piece, however, the spring piece is not stable enough to guarantee a close fit.

US 4 659 203 A describes an interchangeable lens unit that is detachably attachable to a camera main body through an improved bayonet arrangement which includes three sets of corresponding bayonet claws, one of the corresponding bayonet claws of each set being provided on a mount member of the lens unit and the other on a mount member of the camera main body. The bayonet claws of the three sets are formed, in mutual dimension and dispositions thereof, such that the corresponding bayonet claws of one of the sets engage one another at an upper peripheral part of the mount members immediately above the center of the mount members and the corresponding bayonet claws of the remaining two sets engage one another respectively at lateral side peripheral parts of the mount members diametrically opposite to one another with respect to the center of the mount members in the lateral direction, when the camera main body and the lens unit attached thereto are viewed from their front with the camera main body held in a normal erect state. The camera main body is provided with a spring member which can urge the bayonet claws on the mount member of the lens unit.

GB 2 241 068 A describes a mount assembly having mounts which are provided on optical devices to be detachably attached to each other and which have mount surfaces which come into contact with each other when the optical devices are attached to each other wherein at least one of the mounts includes in combination a mount body which is made of synthetic resin and which is provided with the mount surface and a reinforcing metal ring member. An elastically deformable ring member may be present in this document.

US 2008/075454 A1 describes an interchangeable lens selectively mountable to a first-type camera body and a second-type camera body, the first-type camera body including a first mount ring to which the interchangeable lens is mountable, the second-type camera body including a second mount ring to which the interchangeable lens is mountable, an outer diameter of the second mount ring being smaller than an outer diameter of the first mount ring. The interchangeable lens includes an annular packing made of a resilient material. An inner peripheral surface of the annular packing is positioned radially outside the second mount ring when the interchangeable lens is mounted to the second-type camera body. The inner peripheral surface of the annular packing is positioned radially inside an outer peripheral surface of the first mount ring when the interchangeable lens is mounted to the first-type camera body.

### Summary of the Disclosure

The main technical problem to be solved by the embodiments of the present disclosure is to provide a lens limiting assembly which can lock a lens to prevent the lens from rotating or falling off in an axial direction.

Another technical problem to be solved by the embodiments of the present disclosure is to provide a camera body which has said lens limiting assembly and can lock a lens to prevent the lens from rotating or falling off in an axial direction.

A further technical problem to be solved by the embodiments of the present disclosure is to provide a camera having said body.

The present invention relates to a lens limiting assembly according to independent claim 1, to a camera body according to claim 8, and to a camera according to claim 14. Preferred embodiments are described dependent claims 2 to 7, 9 to 13, and 15.

In a first, general aspect, the embodiments of the present disclosure provide a lens limiting assembly for limiting a lens which is provided with a snapping body on an outer side thereof, said lens limiting assembly comprising: an elastic element; a lens assembly ring which is arranged on said elastic element, wherein said snapping body is snapped below the elastic element when said lens is assembled into said lens assembly ring; and a locking ring which is rotatably arranged outside the lens assembly ring, wherein the locking ring abuts against and presses said elastic element when said locking ring rotates in one direction so that said elastic element presses said snapping body of the lens so as to lock the lens.

In another, second aspect, the embodiments of the present disclosure provide a camera body, comprising a fixing frame and the lens limiting assembly according to the first aspect, said fixing frame having a contact base mounting position; said lens limiting assembly being arranged at said contact base mounting position; said lens limiting assembly being used to limit a lens, and said lens being provided with a snapping body on the outer side thereof.

In a further, third aspect, the embodiments of the present disclosure provide a camera comprising a lens and the camera body of the second aspect.

The lens limiting assembly provided in the embodiments of the present disclosure is arranged with a locking ring; when the locking ring is screwed on, the elastic element is pressed to tightly press the snapping body of the lens, so as to lock the lens to prevent the lens from rotating and falling off in an axial direction. For the camera body and camera provided in the embodiments of the present disclosure, since said lens limiting assembly is present, the lens and the body can be locked to prevent the lens from rotating and falling off in an axial direction.

### Description of the Drawings

FIG. 1 is an assembled schematic diagram of a camera provided in a first preferred embodiment of the present disclosure.
FIG. 2 is an exploded schematic view of the camera as shown in FIG. 1.
FIG. 3 is an exploded schematic view of the camera as shown in FIG 2.
FIG. 4 is an exploded schematic view of a limiting structure as shown in FIG. 3.
FIG. 5 is a partially assembled schematic diagram of the limiting structure as shown in FIG. 4 assembled on said camera.
FIG. 6 is a sectional view of the camera in FIG. 5 taken along VI-VI.
FIG 7 is an exploded schematic view of the lens limiting assembly as shown in FIG. 3.
FIG. 8 is an enlarged schematic view of part VIII in FIG 4.
FIG. 9 is an assembled schematic diagram of the lens assembly ring as shown in FIG. 4 with a locking ring.
FIG. 10 is an assembled schematic diagram of the lens limiting assembly as shown in FIG. 4.
FIG. 11 is a sectional view of the camera as shown in FIG. 1 taken along XI-XI.
FIG. 12 is an enlarged schematic view of part XI in FIG. 11.
FIG. 13 is an exploded perspective view of the lens limiting assembly provided in a second preferred embodiment of the present disclosure.
FIG. 14 is a schematic diagram of the rear side of the lens assembly ring of FIG. 13.
FIG. 15 is an assembled schematic diagram of the lens assembly ring of FIG. 14 with a locking ring.
FIG. 16 is a partially exploded perspective schematic diagram of the camera body provided in the second preferred embodiment of the present disclosure.
FIG. 17 is an assembly schematic diagram of the camera body provided in the second preferred embodiment of the present disclosure.
FIG. 18 is a perspective schematic diagram of the lens of the camera provided in the second preferred embodiment of the present disclosure, before being assembled with the body.
FIG. 19 is a sectional view of the lens of FIG. 18 after being assembled with the body.
FIG. 20 is an enlarged view of part XIX in FIG. 7.

### Description of reference signs for main elements

**[Table 1]**

| | |
|---|---|
| Camera | 300 |
| Lens | 310 |
| Lens cone | 312 |
| Assembly part | 313 |
| Snapping body | 314 |
| Camera body | 200 |
| Fixing frame | 210 |
| Contact | 215 |
| First assembly hole | 216 |
| Second assembly hole | 217 |
| Mounting column | 2171 |
| Stepped surface | 2173 |
| Via hole | 2174 |
| Contact base mounting position | 220 |
| Locating pin | 230 |
| Bolt | 240 |
| Limiting structure | 250 |
| Press key | 251 |
| Key body | 2511 |
| First surface | 2512 |
| Second surface | 2513 |
| Snapping space | 2514 |
| Snapping part | 2515 |
| First snapping arm | 2516 |
| First inclined surface | 2517 |
| Surface | 2518 |
| Second snapping arm | 2519 |
| Limiting boss | 253 |
| Post | 2531 |
| Bracket | 2533 |
| Shaft | 2535 |
| First supporting part | 2536 |
| Second supporting part | 2537 |
| Limiting end | 2538 |
| Upper boss | 2538a |
| Lower boss | 2538b |
| Second inclined surface | 2538c |
| Support end | 2539 |
| First elastic member | 255 |
| Second elastic member | 257 |
| Lens limiting assembly | 100 |
| Elastic element | 10 |
| Elastic body | 11 |
| Elastic arm | 12 |
| First end | 121 |
| Second end | 123 |
| First locating hole | 14 |
| Snapping opening | 16 |
| Lens assembly ring | 20 |
| First end face | 21 |
| Second locating hole | 211 |
| Receiving groove | 213 |
| Second end face | 23 |
| Assembly hole | 231 |
| Bolt hole | 233 |
| Limiting part | 25 |
| Mounting part | 27 |
| Locking ring | 30 |
| Body | 31 |
| Hook | 33 |
| Connecting part | 331 |
| Bent part | 333 |
| Flange | 335 |
| Anti-slip part | 35 |
| Lens limiting assembly | 500 |
| Elastic element | 510 |
| First locating hole | 514 |
| Second locating hole | 528 |
| Fitting hole | 529 |
| Bolt hole | 291 |
| Snapping opening | 516 |
| Lens assembly ring | 520 |
| Locking ring | 530 |
| Elastic arm | 512 |
| Limiting part | 522 |
| Receiving groove | 527 |
| First fitting face | 524 |
| Smooth surface | 526 |
| Hook | 532 |
| Connecting part | 5321 |
| Bent part | 5322 |
| Second fitting face | 534 |
| Planar surface | 536 |
| Anti-slip groove | 538 |
| Camera body | 600 |
| Fixing frame | 610 |
| Contact base mounting position | 612 |
| Lens | 700 |
| Lens cone | 712 |
| Assembly part | 713 |
| Snapping body | 714 |
| Contact | 720 |
| Locating pin | 721 |
| Bolt | 722 |
| Telescopic limiting structure | 650 |
| Circular nut | 651 |
| Post | 652 |
| Camera | 800 |

The present disclosure will be further described by the following specific embodiments in conjunction with the above-mentioned figures.

### Particular Embodiments

The technical solutions in the embodiments of the present disclosure are hereinafter described clearly and completely with reference to the accompanying drawings. Evidently, the described embodiments are only some rather than all of the embodiments of the present disclosure. All other embodiments obtained by a person of ordinary skill in the art based on the embodiments of the present disclosure without creative efforts shall fall within the scope of protection of the present disclosure.

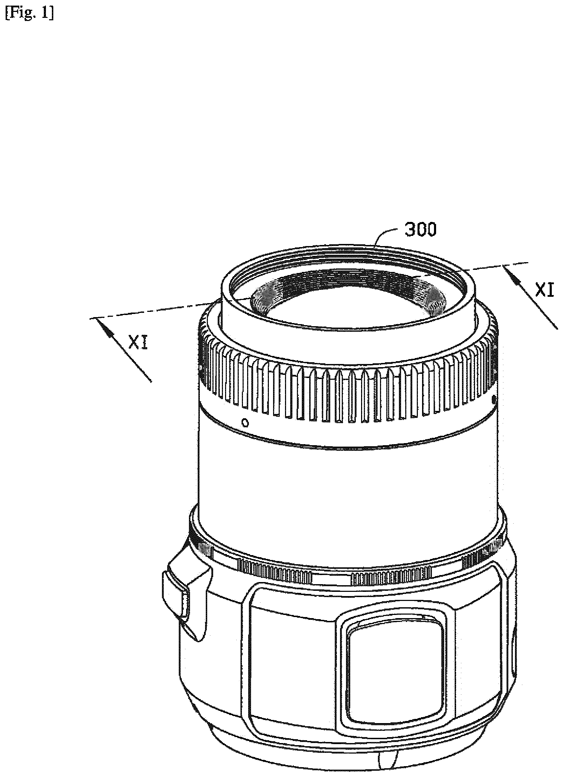

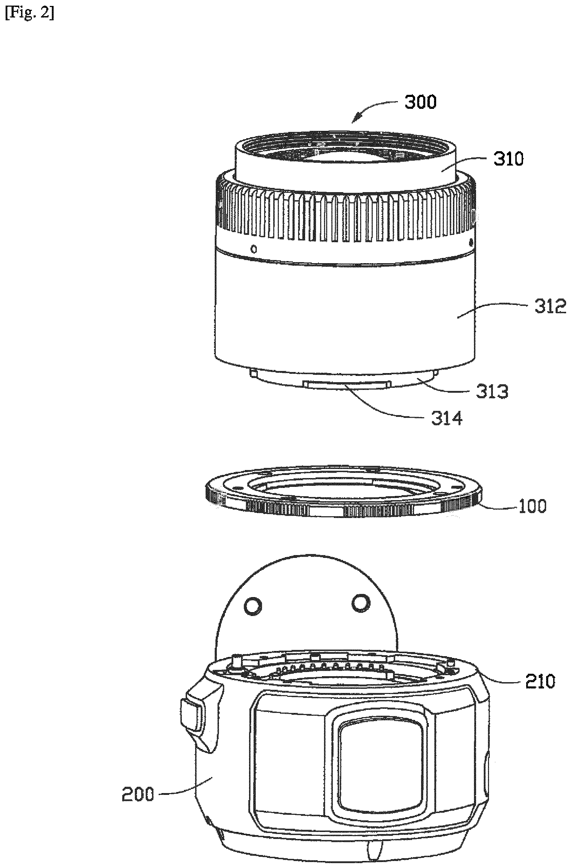

Referring to FIG. 1, the first preferred embodiment of the embodiments of the present disclosure provides a camera 300; said camera 300 may be an ordinary camera with a detachable lens, a single-lens reflex camera, or a camera for a special purpose, e.g., an aerial camera for an unmanned aerial vehicle. Referring to FIG. 2, said camera 300 comprises a lens 310, a camera body 200 and a lens limiting assembly 100, and said lens 310 is mounted in said camera body 200 by means of said lens limiting assembly 100.

Said lens 310 comprises a lens cone 312, wherein an assembly part 313 is arranged at a bottom end of said lens cone 312, and three snapping bodies 314 spaced apart from each other are arranged on an outer wall of said assembly part 313 and are used to cooperate with said lens limiting assembly 100.

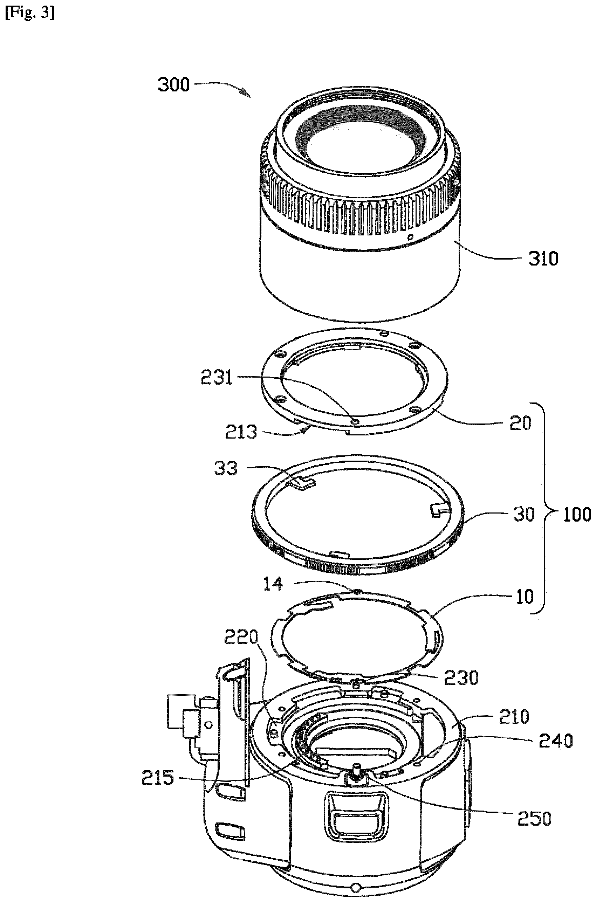

Referring to FIG. 3, said camera body 200 comprises a fixing frame 210, and said lens limiting assembly 100 is arranged in said fixing frame 210. Contacts 215 are arranged in said fixing frame 210 and are electrically connected to a driver or the like in the lens 310 when the lens 310 is fastened and assembled.

Said fixing frame 210 is provided with a plurality of contact base mounting positions 220 for assembling said lens 310. Said fixing frame 210 is further provided with a locating pin 230, four bolts 240 and a telescopic limiting structure 250.

It is understood that the number of said locating pins 230, said bolts 240 and said snapping bodies 314 are not limited to the above numbers, and can be designed according to practical requirements.

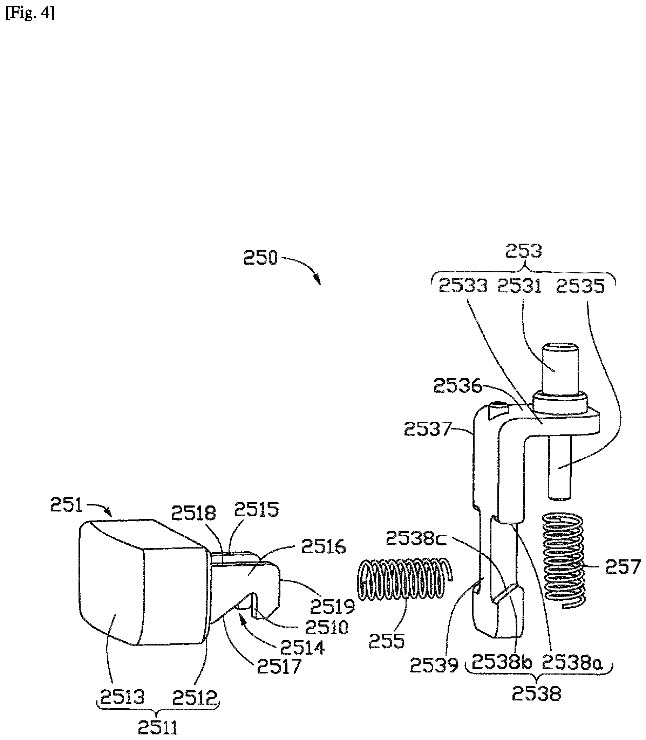

Referring to FIG. 4, said limiting structure 250 comprises a press key 251, a limiting boss 253, a first elastic member 255 and a second elastic member 257. The press key 251 is connected to the limiting boss 253, the first elastic member 255 is arranged between the press key 251 and the limiting boss 253, and the second elastic member 257 is sheathed on the limiting boss 253.

The press key 251 is movably arranged on a side surface of the camera body 200, so as to facilitate the pressing by a user. The press key 251 comprises a key body 2511 and two snapping parts 2515 arranged on the key body 2511. The key body 2511 is a substantially cuboid structure comprising a first surface 2512 and a second surface 2513 arranged oppositely. Said first surface 2512 is close to said limiting boss 253, while said second surface 2513 is far away from said limiting boss 253. Said two snapping parts 2515 are formed by two sides of said first surface 2512 extending perpendicularly in the direction away from said first surface 2512, and are arranged spaced apart from each other, and said second surface 2513 is used to facilitate the pressing by a user to control the press key 251. Each snapping part 2515 comprises a first snapping arm 2516 and a second snapping arm 2519 which are integrally arranged. A first inclined surface 2517 is formed at one side of said first snapping arm 2516. In this embodiment, the first inclined surface 2517 inclines from the first surface 2512 of the key body 2511 in the direction away from the first surface 2512, i.e. the width of said first snapping arm 2516 in a direction parallel to the first surface 2512 reduces gradually from the first surface 2512 in the direction away from the first surface 2512. The first snapping arm 2516 further comprises a surface 2518 opposite to the first inclined surface 2517, and in this embodiment, the surface 2518 is a planar surface. The second snapping arm 2519 is arranged at the end of the first snapping arm 2516 opposite to the first surface 2512, and is arranged substantially parallel to the first surface 2512. The second snapping arm 2519 comprises a clamping edge 2510, the clamping edge 2510 is formed by extending the side of the first inclined surface 2517 opposite to the first surface 2512 downward in a direction parallel to the first surface 2512. A snapping space 2514 is formed between the clamping edge 2510 and the first inclined surface 2517 to snap the limiting boss 253.

It is understood that the number of said snapping parts 2515 is not limited to the above number, and can be designed according to practical requirements.

The limiting boss 253 can be movably arranged in the camera body 200, and used to relatively limit the lens 310. The limiting boss 253 comprises a post 2531, a bracket 2533 and a shaft 2535. The post 2531 and the shaft 2535 are arranged at two opposite sides of the bracket 2533. The bracket 2533 is of a substantially inverted L-shaped structure, and comprises a first supporting part 2536 and a second supporting part 2537 which are arranged substantially perpendicular to each other. The post 2531 is vertically arranged on the first supporting part 2536, and the shaft 2535 is vertically arranged on the other side of the first supporting part 2536 opposite to the post 2531 and on the same straight line as the post 2531. The second supporting part 2537 is arranged parallel to a key body 2511 of the press key 251. Portions are removed by cutting inwardly from both sides of the middle lower position of said second supporting part 2537, so as to form two limiting ends 2538 at two sides of the second supporting part 2537 and a support end 2539 between the two limiting ends 2538. Each of said limiting ends 2538 comprises an upper boss 2538a and a lower boss 2538b which are arranged to protrude relative to the support end 2539. Further, a second inclined surface 2538c is formed on said lower boss 2538b. Said second inclined surface 2538c has an inclination matched with that of said first inclined surface 2517.

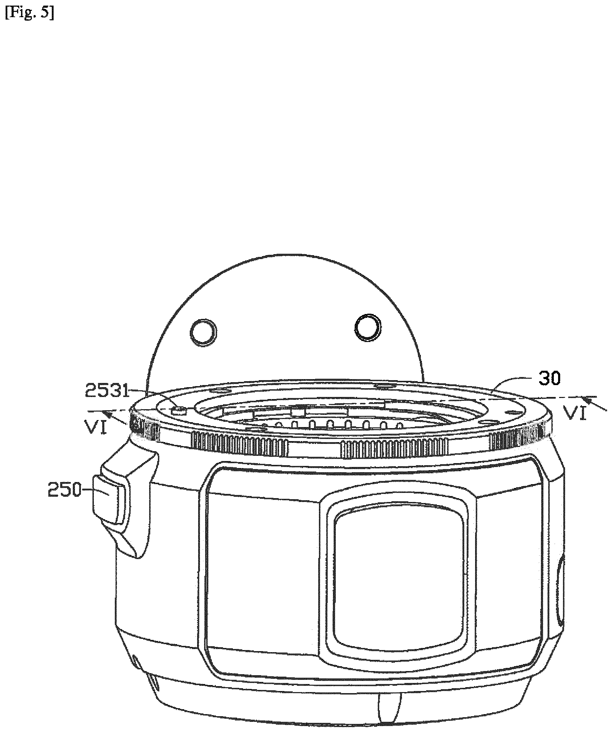

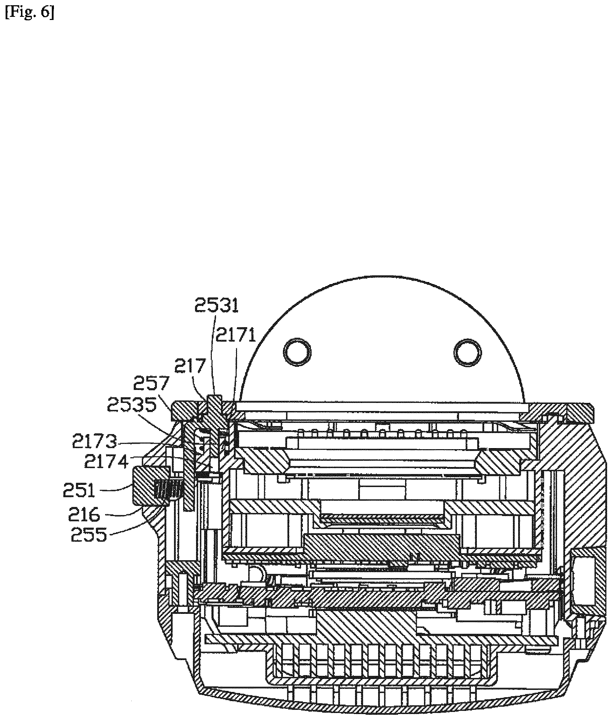

Referring to FIGS. 5 and 6 in conjunction, an outer wall of the fixing frame 210 is provided with a first assembly hole 216 facing inwards. The lens limiting assembly 100 comprises a lens limiting ring 20 and the lens limiting ring 20 is provided on the fixing frame 210. The lens assembly ring 20 is provided with a second assembly hole 217 at the side thereof facing the lens 310. The press key 251 and the first elastic member 255 pass through the first assembly hole 216 and are received in said camera body 200, and the limiting boss 253 and the second elastic member 257 pass through said second assembly hole 217 and are received in said camera body 200. The interior of the first assembly hole 216 is in communication with the interior of the second assembly hole 217, so that the press key 251, the first elastic member 255, the limiting boss 253 and the second elastic member 257 are assembled with each other.

In this embodiment, a mounting column 2171 is formed in the interior of the second assembly hole 217, stepped surfaces 2173 are formed at two sides of the mounting column 2171, and the mounting column 2171 is further provided in the centre thereof with a via hole 2174 through which said shaft 2535 can pass to prevent the limiting boss 253 from deviating.

When assembling the limiting structure 250, the support end 2539 of the limiting boss 253 is accommodated between two snapping parts 2515 of the press key 251, the first snapping arm 2516 of each of said snapping parts 2515 passes through each of said limiting ends 2538, the first inclined surfaces 2517 of said first snapping arms 2516 respectively abut against the second inclined surfaces 2538c of the lower bosses 2538b of the limiting boss 253, the clamping edge 2510 clamps to the lower boss 2538b, the first elastic member 255 is elastically abutted between the first surface 2512 of the key body 2511 and the support end 2539, and the second elastic member 257 is sheathed on the shaft 2535, with one end thereof abutting against the first supporting part 2536 and the other end abutting against the stepped surface 2173. When a user presses the press key 251, said second inclined surface 2538c and said first inclined surface 2517 are fitted with each other, and the acting force along the first inclined surface 2517 can be decomposed into a pushing force perpendicular to the key body 2511 and a downward pressure parallel to the key body 2511. The pushing force presses the first elastic member 255 toward the support end 2539, and the downward pressure acts on the second inclined surface 2538c and drives the limiting boss 253 to move downward so as to in turn compress said second elastic member 257 and release same from said lens 310; and when the user no longer presses the press key 251, the first elastic member 255 and the second elastic member 257 recovers from the deformation and drives the press key 251 to rebound while driving the post 2531 to snap into the lens 310 to prevent the lens 310 from rotating. During the rebound of the press key 251, the clamping edge 2510 clamps to the lower boss 2538b to prevent the press key 251 from excessively rebounding and releasing from the first assembly hole 216.

Said lens limiting assembly 100 is used to lock said lens 310 and prevent the lens 310 from rotating or falling off of said camera body 200 in an axial direction.

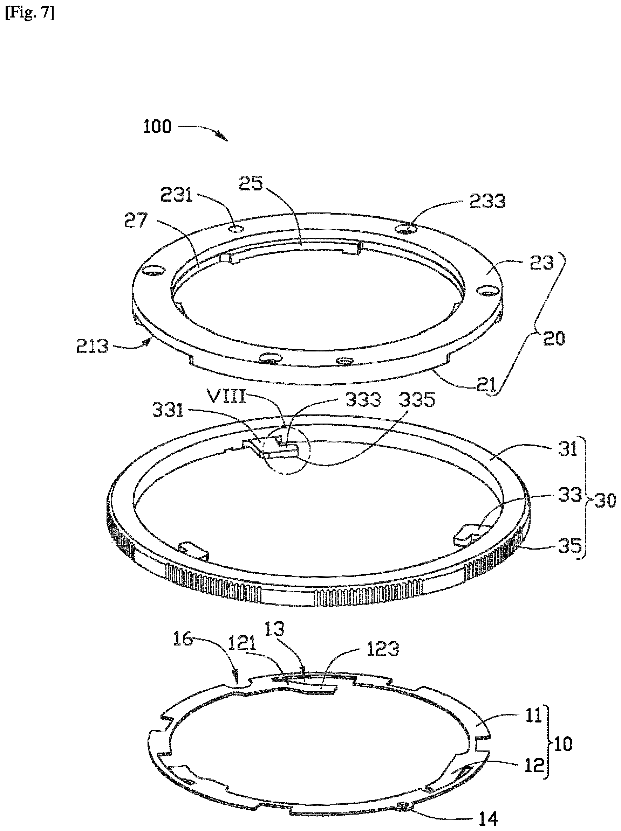

Referring to FIG. 7, said lens limiting assembly 100 comprises an elastic element 10, a lens assembly ring 20 and a locking ring 30. Said lens assembly ring 20 is arranged on said elastic element 10 and is accommodated in said locking ring 30, and said locking ring 30 can rotate relative to said lens assembly ring 20.

Said elastic element 10 comprises an elastic body 11 and a plurality of elastic arms 12 on said elastic body 11. In this embodiment, said elastic body 11 is an annular spring piece, the number of said elastic arms 12 is three, and said three elastic arms 12 are arranged apart from each other at the inner side of said elastic body 11. Specifically, each of said elastic arms 12 is formed by extending the inner side of said elastic body 11 downward in the direction of the axis of said elastic body 11. Said elastic arm 12 comprises a first end 121 and a second end 123, with the position of said first end 121 in the direction of the axis of said elastic body 11 being higher than the position of said second end 123 in the direction of the axis of said elastic body 11, so that a gap 13 is formed between said elastic arm 12 and said elastic body 11 to accommodate the element of said locking ring 30. Said elastic body 11 is further provided with a first locating hole 14 and a snapping opening 16. In this embodiment, said snapping opening 16 is formed by recessing the outer wall of said elastic body 11 inwardly, and the shape of said snapping opening 16 is adapted to said limiting structure 250 of said camera body 200 so as to be nested and snapped in said limiting structure 250.

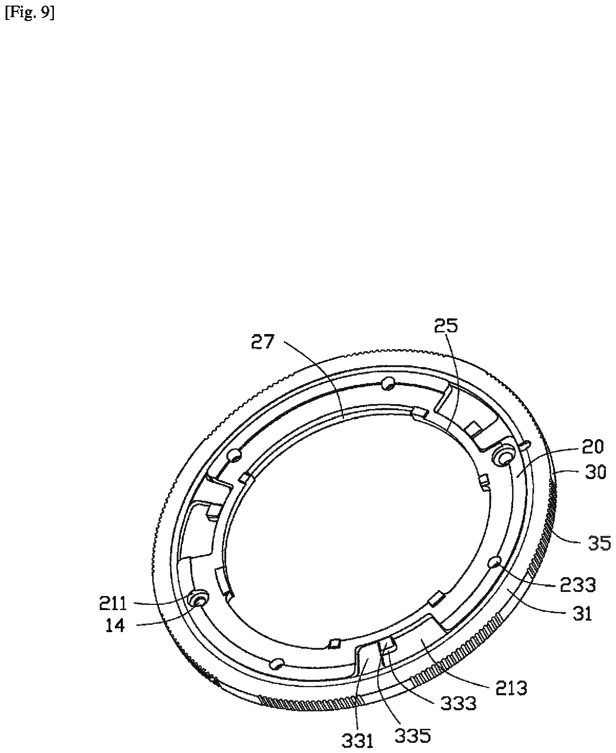

Said lens assembly ring 20 comprises a first end face 21 and a second end face 23 which are arranged oppositely, said first end face 21 being arranged to face said elastic element 10, and said second end face 23 being arranged to face away from said elastic element 10. Referring to FIG. 9, said first end face 21 is provided with a second locating hole 211, and said second locating hole 211 is joined in series with said first locating hole 14 through a locating pin 230 of said camera body 200. Specifically, the locating pin 230 on said camera body 200 passes through said first locating hole 14 and said second locating hole 211 so as to fix said elastic element 10 and lens assembly ring 20 on said camera body 200. Three receiving grooves 213 spaced apart from each other are further recessed on said first end face 21 to receive the elements on said locking ring 30. Said second end face 23 is provided with an assembly hole 231 which penetrates through said first end face 21 and said second end face 23, and a limiting boss 253 of said camera body 200 passes through said assembly hole 231 to locate said lens 310. Said second end face 23 is further provided with four bolt holes 233. Said four bolt holes 233 are used to allow four bolts 240 on said camera body 200 to pass through so as to fix said lens assembly ring 20 to said camera body 200.

The inner wall of said lens assembly ring 20 is a smooth surface, and is provided with three limiting parts 25 protruding towards the inner side and spaced apart from each other, with a mounting part 27 being formed between every two of said limiting parts 25 so that the snapping body 314 of said lens 310 can pass therethrough and being mounted in said camera body 200.

It is understood that the number of said elastic arms 12, said receiving grooves 213 and said limiting parts 25 are not limited to the above numbers, and can be designed according to practical requirements.

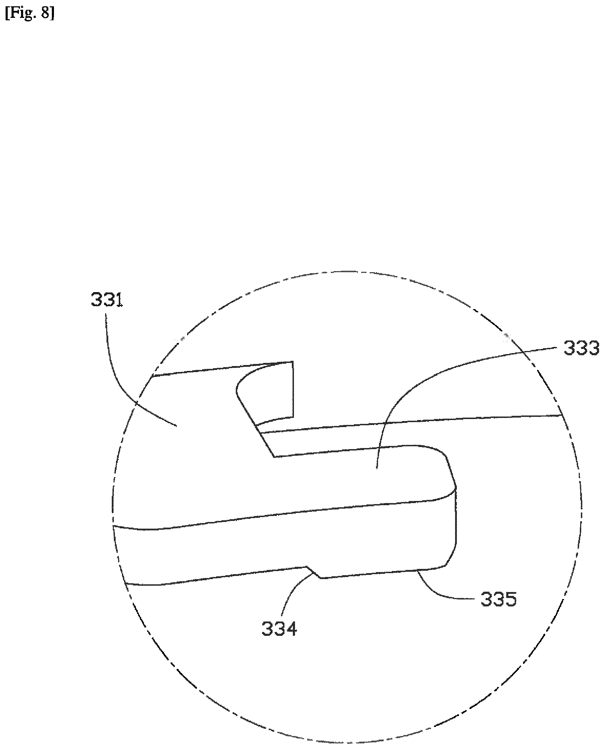

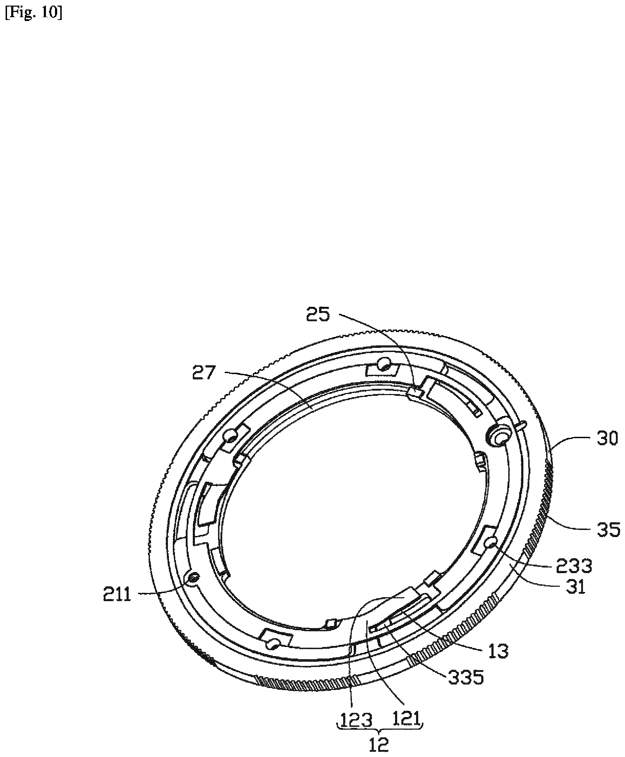

Said locking ring 30 comprises a body 31, a hook 33 and an anti-slip part 35, said hook 33 and said anti-slip part 35 being arranged at the inner and outer sides of said body 31. Said body 31 is of a circular ring structure, and said circular ring has a diameter larger than that of said lens assembly ring 20 so as to receive said lens assembly ring 20 therein. Said hook 33 is formed by protruding inwardly from the inner side of said body 31, and in this embodiment, said hook 33 is substantially L-shaped and comprises a connecting part 331 and a bent part 333 which are integrally arranged. Said connecting part 331 is connected to the inner wall of said body 31, and one end of said bent part 333 is connected to said connecting part 331, and the other end thereof extends straightly. The end of said bent part 333 extends toward the side close to said elastic arm 12 to form a flange 335 which is used to abut against the elastic arm 12 of said elastic element 10. Referring to FIG. 8, an inclined surface 334 is formed at the side of said flange 335 facing said connecting part 331 to connect said bent part 333 to said flange 335. Referring to FIGS. 9 and 10 in conjunction, when said elastic element 10 and lens assembly ring 20 are received in said locking ring 30, the connecting part 331 and the bent part 333 of said hook 33 are received in said receiving groove 213, and said flange 335 is accommodated in said gap 13 and abuts against said elastic arm 12. When said flange 335 moves relative to said elastic arm 12 and abuts against said elastic arm 12, said inclined surface 334 is in contact with said elastic arm 12, so that said flange 335 moves across said inclined surface 334 so as to abut against said elastic arm 12, thereby ensuring the smooth fitting of said flange 335 and said elastic arm 12. Said anti-slip part 35 may be an anti-slip thread, and is used to avoid slipping out of a hand when a user rotates said locking ring 30.

Referring to FIG. 6, when said lens limiting assembly 100 is assembled in said fixing frame 210, said elastic element 10 is nested and snapped on said limiting structure 250 through said snapping opening 16, said lens assembly ring 20 is accommodated on said locking ring 30 and arranged on said elastic element 10, and said locating pin 230 passes through the first locating hole 14 of said elastic element 10 and the second locating hole 211 of said lens assembly ring 20 so as to connect said elastic element 10 and said lens assembly ring 20 in series; said limiting structure 250 passes through the assembly hole 231 of said lens assembly ring 20 and can stretch and retract in the direction in which said limiting structure 250 protrudes, so as to locate said lens 310; and said locking ring 30 is rotatably arranged on the outer side of said lens assembly ring 20, and said hook 33 is received in said receiving groove 213 and abuts against the elastic arm 12 of said elastic element 10.

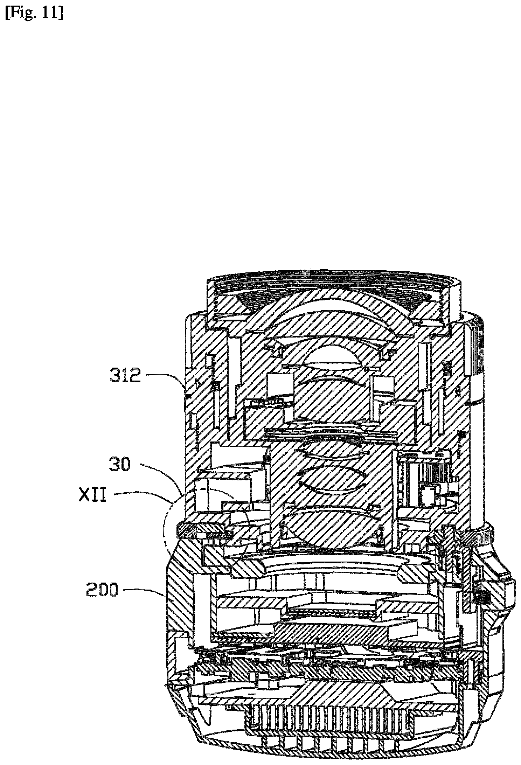

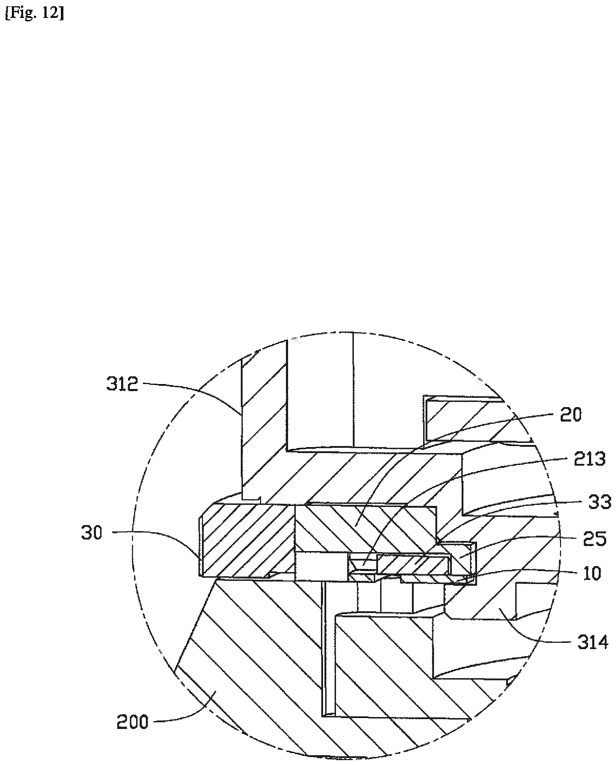

Referring to FIGS. 11 and 12, when said lens 310 is assembled into said lens assembly ring 20, said snapping body 314 slides into said lens assembly ring 20 from said mounting part 27; then said lens 310 is rotated so that the snapping body 314 rotates to a position below said limiting part 25 and elastic arm 12 of said lens assembly ring 20; and then said locking ring 30 can be rotated in one direction, so that a flange 335 of said hook 33 slides from said second end 123 of the elastic arm 12 to said first end 121 of the elastic arm 12; and since the position of said first end 121 of the elastic arm 12 is higher than the position of said second end 123, the sliding of said flange 335 also presses said elastic element 10, and said elastic arm 12 in turn presses the snapping body 314 of said lens 310 so that said lens 310 moves in the direction towards said camera body 200, so as to lock said lens 310 to said camera body 200. When said locking ring 30 rotates in the opposite direction, said flange 335 of the hook 33 slides from said first end 121 of the elastic arm 12 to said second end 123 to in turn release said elastic arm 12, so that said lens 310 is no longer locked to said camera body 200, and then said lens 310 can be taken out from said camera body 200.

It is understood that the shape of said flange 335 of the hook 33 is not limited to that shown in the above figures of the embodiments, provided that the height is greater than the distance between said first end 121 of the elastic arm 12 and said elastic body 11.

In other embodiments, said lens assembly ring 20 is not limited to being fixed to said camera body 200 by means of a bolt hole and a bolt, and can also be fixed by way of adhesion.

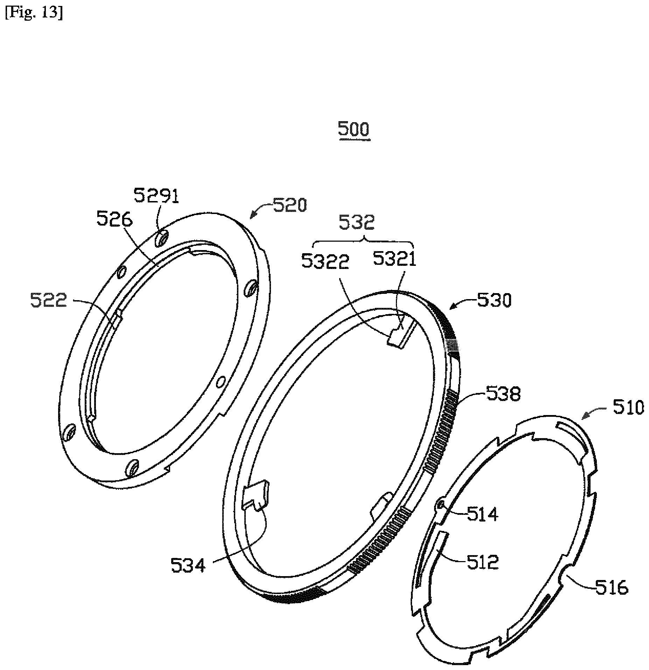

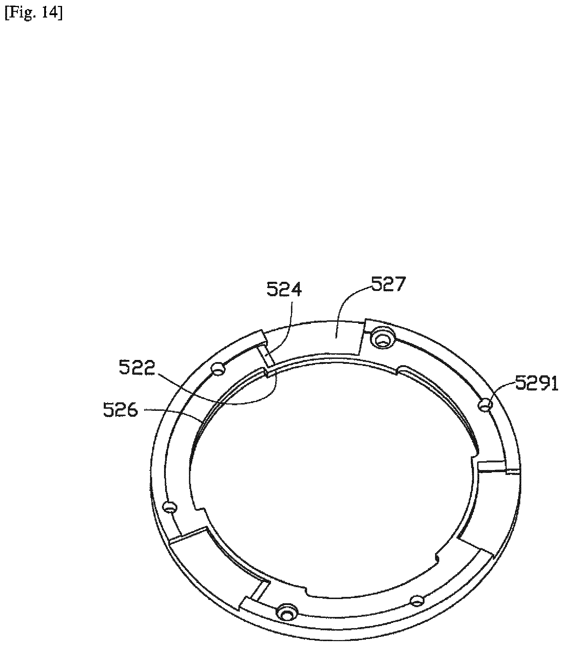

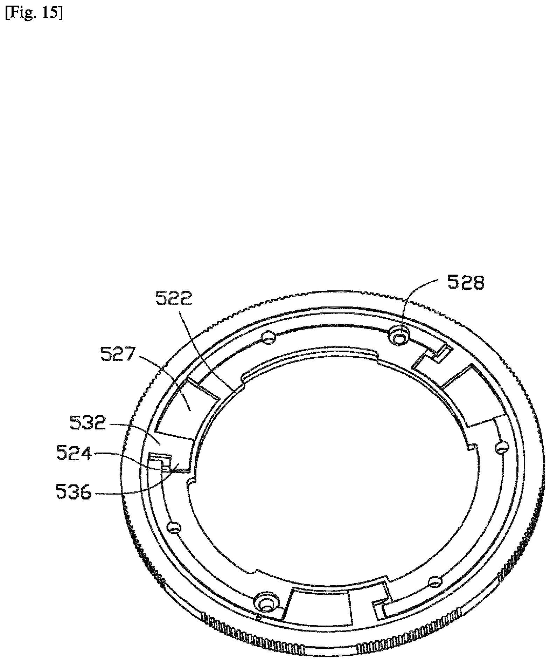

Referring to FIGS. 13-15, the second preferred embodiment of the present disclosure provides a lens limiting assembly 500, the lens limiting assembly 500 comprising an elastic element 510, a lens assembly ring 520 and a locking ring 530. The lens assembly ring 520 is arranged on the elastic element 510, the lens assembly ring 520 is accommodated in the locking ring 530, and the locking ring 530 is rotatable relative to the lens assembly ring 520.

The elastic element 510 is an annular spring piece, and three elastic arms 512 spaced apart from each other extend from the inner side of the spring piece. The elastic element 510 is provided with a first locating hole 514 and a snapping opening 516. In this embodiment, the snapping opening 516 is provided inwardly from the outer wall of the elastic element 510 and is of a semi-circular shape.

A second locating hole 528 is provided on the end face of the lens assembly ring 520 facing the elastic element 510, and the second locating hole 528 is a blind hole corresponding to the first locating hole 514 and is connected in series therewith by means of a locating pin of the camera body. The lens assembly ring 520 is further provided with one fitting hole 529 which penetrates through the opposite end faces and fits with other components of the camera body, and four bolt holes 5291 fixed to the camera body; three limiting parts 522 spaced apart from each other extend from the inner wall of the lens assembly ring 520; and three receiving grooves 527 spaced apart from each other are provided on the end face of the lens assembly ring 520 facing the elastic element 510. Each receiving groove 527 is provided at one side with a first fitting face 524. In this embodiment, the bottom face of the receiving groove 527 is a planar surface, and the first fitting face 524 is formed by extending the bottom face outwardly, and is inclined in a circumferential direction of the lens assembly ring 520. The limiting part 522 is a rib arranged at the inner side of the lens assembly ring 520. The left and right sides of each limiting part 522 are smooth surfaces, and may directly serve as the inner wall face of the lens assembly ring 520 or as a sliding groove face provided inwardly.

The locking ring 530 is provided on the outer side with an anti-slip groove 538, and on the inner side with three hooks 532 spaced apart from each other. In this embodiment, each hook 532 is of a substantially L-shape extending from the inner wall of the locking ring 530, and each hook 532 is provided with a connecting part 5321 connected to the inner wall of the locking ring 530, and a bent part 5322 connected to the connecting part 5321. A second fitting face 534 which is inclined relative to the other parts of the surface is provided on the end of the surface of each bent part 5322 facing said lens assembly ring 520, and the other surface of each bent part 5322 opposite to said second fitting face 534 is a planar surface 536. The second fitting face 534 has an inclination matched with that of the first fitting face 524, each hook 532 is received in a corresponding receiving groove 527, the second fitting face 534 abuts against the first fitting face 524, and the planar surface 536 is used to abut against the elastic arm 512 of the elastic element 510.

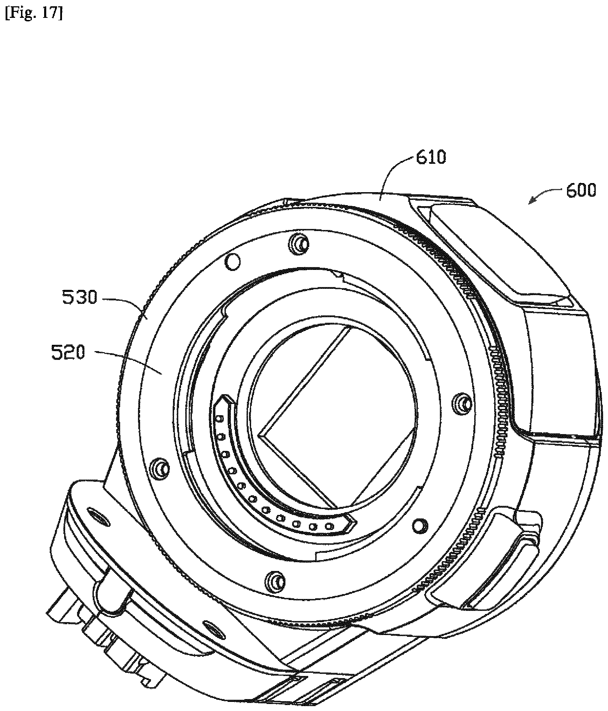

When a lens provided at an outer side thereof with three snapping bodies spaced apart from each other (see FIG. 17) is to be assembled into the lens assembly ring 520, the snapping part slides from the smooth surface 526 of the lens assembly ring 520 into the lens assembly ring 520; then, by rotating the lens, the snapping part may rotate to a position below the limiting part 522 and the elastic arm 512 of the elastic element 510; and then a user may rotate the locking ring 530 in one direction, so that the second fitting face 534 of the hook 532 moves on the first fitting face 524 and presses the elastic element 510 along with the increase in the height of the first fitting face 524, and the elastic arm 512 of the elastic element will press the snapping part of the lens in the direction towards the camera body, i.e., to lock the lens. When the locking ring 530 rotates in the opposite direction, the second fitting face 534 of the hook 532 moves in the opposite direction on the first fitting face 524, and the elastic element 510 is released along with the decrease in the height of the first fitting face 524, so that the lens can rotate out.

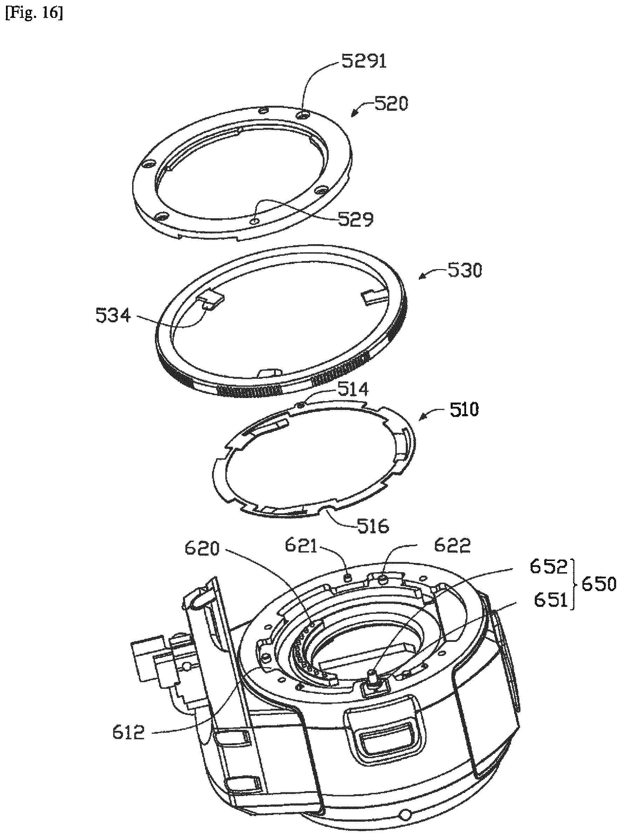

Referring to FIGS. 16 and 17 in conjunction, the camera body 600 provided by the embodiments of the present disclosure comprises a fixing frame 610, the fixing frame 610 having a contact base mounting position 612 for assembling a lens which is provided at the outer side thereof with a snapping part, and the lens limiting assembly 500 being provided at the contact base mounting position 612. The fixing frame 610 is further provided with a locating pin 621 and four bolts 622 protruding therefrom and is provided with a telescopic limiting structure 650, the elastic element 510 being nested and snapped with a circular nut 651 of the telescopic limiting structure 650 through the snapping opening 516. The lens assembly ring 520 is fitted with the locking ring 530 and arranged on the elastic element 510, and the locating pin 621 passes through the first locating hole 514 of the elastic element 510 and passes into the second locating hole 528 of the lens assembly ring 520 so as to connect the elastic element 510 and the lens assembly ring 520 in series; the four bolts 622 pass into four bolt holes 5291 of the lens assembly ring 520 to fix the lens assembly ring 520; a post 652 of the telescopic limiting structure 650 protrudes out of the fitting hole 529 of the lens assembly ring 520, and can stretch and retract in the direction in which the post 652 protrudes and can locate with the lens; and the locking ring 530 is rotatably arranged at the periphery of the lens assembly ring 520.

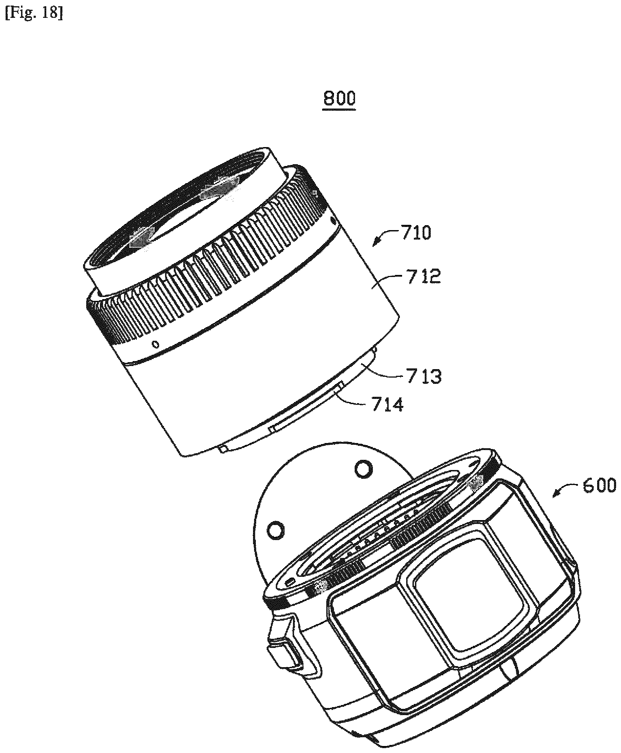

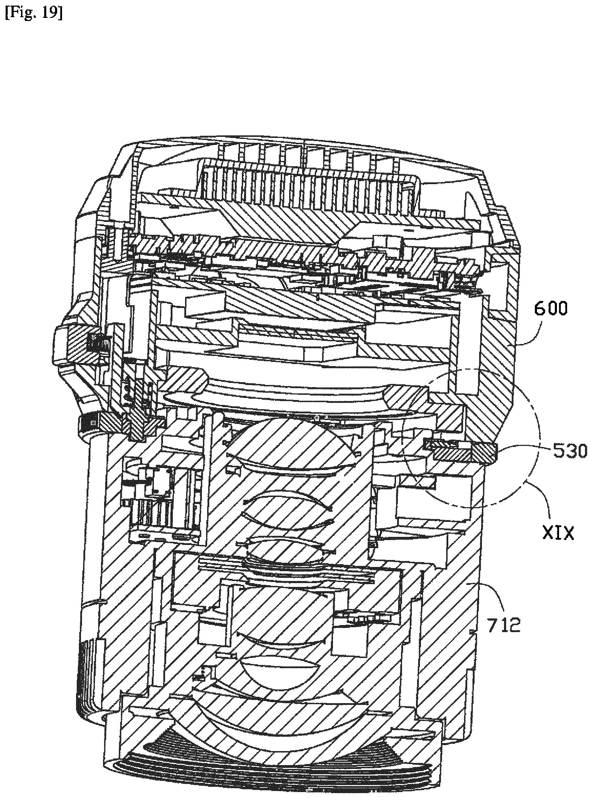

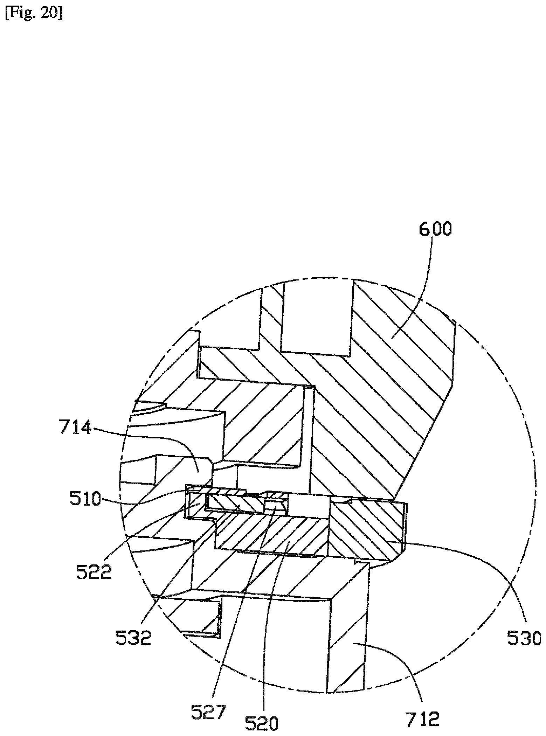

Referring to FIGS. 18-20 in conjunction, the camera 800 provided by the second preferred embodiment of the present disclosure comprises a lens 700 and a camera body 600. The lens 700 comprises a lens cone 712, the lens cone 712 comprises an assembly part 713, and three snapping bodies 714 spaced apart from each other are provided on the outer wall of the assembly part 713; and in this embodiment, the snapping body 714 is a flange. When the lens 700 is to be assembled into the lens assembly ring 520, the snapping body 714 slides from the smooth surface 526 of the lens assembly ring 520 into the lens assembly ring 520; then, by rotating the lens 700, the snapping body 714 rotates to a position below the elastic arm 512 of the elastic element 510; and then the locking ring 530 can rotate in one direction, so that the second fitting face 534 of the hook 532 moves on the first fitting face 524 and presses the elastic element 510 along with the increase in the height of the first fitting face 524 in the direction perpendicular to the bottom face of the receiving groove 527, and the elastic arm 512 of the elastic element 510 will press the snapping body 714 of the lens 700 in the direction towards said camera body 600, i.e., to lock the lens 700 to said camera body 600. When the locking ring 530 rotates in the opposite direction, the second fitting face 534 of the hook 532 moves in the opposite direction on the first fitting face 524 and releases the elastic element 510 along with the decrease in the height of the first fitting face 524, so that the lens 700 can rotate out of said camera body 600.

Contacts 620 are arranged in the camera body 600 and are electrically connected to a driver or the like in the lens 700 when the lens 700 is fastened and assembled.

It is understood that the number of said elastic arms 512, said receiving grooves 527, said limiting parts 522, said hooks 532 and said snapping bodies 714 are not limited to the above numbers, and can be designed according to practical requirements.

It is understood that the shape of said hook 532 is not necessarily as shown in the above figures of the embodiments, provided that it is able to smoothly slide between the first fitting face 524 and the elastic element 510.

In other embodiments, said lens assembly ring 520 is not necessarily fixed by means of a bolt hole fitted to a bolt of the camera body, and can also be fixed by adhesion and the like.

In summary, the lens limiting assembly provided in the embodiments of the present disclosure is arranged with a locking ring; when the locking ring is screwed on, the elastic element is pressed to tightly press the snapping part of the lens, so as to lock the lens to prevent the lens from rotating and falling off in an axial direction. For the camera body and camera provided in the embodiments of the present disclosure, since said limiting assembly is present, the lens and the body can be locked to prevent the lens from rotating and falling off in an axial direction.

The description above is merely some embodiments of the present disclosure and is not intended to limit the patent scope which is defined by the claims.

## Claims

1. A lens limiting assembly (100) for limiting a lens which is provided with a snapping body (314) on an outer side thereof, said lens limiting assembly (100) comprising:
an elastic element (10); and
a lens assembly ring (20) which is arranged on said elastic element (10),
wherein said snapping body (314) is snapped below the elastic element (10) when said lens is assembled into said lens assembly ring (20);
**characterized in that** said lens limiting assembly (100) further comprises:
a locking ring (30) which is rotatably arranged outside the lens assembly ring (20), wherein the locking ring (30) abuts against and presses said elastic element (10) when said locking ring (30) rotates in one direction, so that said elastic element (10) presses the snapping body (314) of said lens so as to lock the lens.

2. The lens limiting assembly (100) as claimed in claim 1, wherein said elastic element (10) is an annular spring piece, said elastic element (10) comprises an elastic body and an elastic arm, said elastic arm is formed by extending an inner side of said elastic body downward along an axis of said elastic body, and said locking ring (30) comprises a flange which abuts against said elastic arm.

3. The lens limiting assembly (100) as claimed in claim 2, wherein said elastic arm comprises a first end and a second end, a position of said first end in the direction of the axis of said elastic body is higher than a position of said second end in the direction of the axis of said elastic body so that a gap is formed between said elastic arm and said elastic body, and said flange is accommodated in said gap.

4. The lens limiting assembly (100) as claimed in claim 2, wherein said locking ring (30) comprises a body and a hook which protrudes from said body inwardly, said hook comprises a connecting part and a bent part, said connecting part is connected to an inner wall of said body, said lens assembly ring (20) comprises an accommodating groove, said connecting part and said bent part are accommodated in said accommodating groove, one end of said bent part is connected to said connecting part, the other end thereof extends straightly, and said flange is formed at a tail end of said bent part and extends toward said elastic arm,
wherein further preferably:
a side of said flange facing said connecting part forms an inclined surface which connects said flange and said bent part.

5. The lens limiting assembly (100) as claimed in claim 1, wherein said lens assembly ring (20) comprises a first fitting face, and said first fitting face is arranged on an end face of said lens assembly ring (20) facing said elastic element (10) and is inclined in a circumferential direction of said lens assembly ring (20).

6. The lens limiting assembly (100) as claimed in claim 5, wherein the end face of said lens assembly ring (20) is further provided with a receiving groove connected to said first fitting face, said lens assembly ring (20) is accommodated in said locking ring (30), said locking ring (30) comprises a hook, said hook extends from the inner side of said locking ring (30) and is received in said receiving groove, said lens assembly ring (20) comprises a second fitting face which abuts against said first fitting face, said second fitting face is arranged at an end of a surface of said hook facing said lens assembly ring (20), the other surface of said hook opposite to said second fitting face is a planar surface, and said planar surface abuts against said elastic element (10), wherein further preferably:
said hook comprises a connecting part connected to an inner side of said locking ring (30) and a bent part bending and extending from said connecting part, said second fitting face is arranged at the end of the surface of said bent part facing said lens assembly ring (20), and said planar surface is arranged on the other surface of said bent part opposite to said second fitting face.

7. The lens limiting assembly (100) as claimed in claim 1, wherein said lens assembly ring (20) comprises a limiting part, the left and right sides of said limiting part are smooth surfaces, so that said lens is adapted to rotate after said lens slides from said smooth surface into said lens assembly ring (20), in order to move said snapping body (314) to a position below said limiting part and said elastic element (10).

8. A camera body comprising a fixing frame and a lens limiting assembly (100) according to one of the preceding claims, said fixing frame having a contact base mounting position, said lens limiting assembly (100) being arranged at said contact base mounting position, said lens limiting assembly (100) being used to limit a lens, and said lens being provided with a snapping body (314) on the outer side thereof.

9. The camera body as claimed in claim 8, wherein said lens assembly ring (20) comprises a plurality of limiting parts spaced apart from one another, a mounting part is formed between two adjacent limiting parts, and said snapping body (314) enters said lens assembly ring (20) via said mounting part and is snapped below said limiting part.

10. The camera body as claimed in claim 8, wherein said fixing frame is provided with a locating pin and a plurality of bolts, said elastic element (10) is provided with a first locating hole, said lens assembly ring (20) comprises a first end face and a second end face which are arranged oppositely, said first end face is provided with a second locating hole, said locating pin passes through said first locating hole and said second locating hole, said second end face is provided with a plurality of bolt holes, and said bolts correspondingly pass through said bolt holes,
wherein further preferably:
said fixing frame further comprises a limiting structure, said elastic element (10) is provided with a snapping opening, said limiting structure is nested and snapped with said snapping opening, said lens assembly ring (20) is further provided with an assembly hole penetrating through said first end face and said second end face, and said limiting structure comprises a limiting boss which passes through said assembly hole to locate said lens.

11. The camera body as claimed in claim 8, wherein a first assembly hole is provided inwardly on a outer wall of the fixing frame, a second assembly hole is provided on a side of the lens assembly ring (20) facing the lens, the first assembly hole and the second assembly hole are in communication with each other, the limiting structure further comprises a press key, a first elastic member and a second elastic member, the press key and the first elastic member pass through the first assembly hole, and the limiting boss and the second elastic member pass through the second assembly hole.

12. The camera body as claimed in claim 11, wherein the press key comprises a key body and two snapping parts spaced apart from each other and protruding from the key body, each of said snapping parts comprises a first connecting arm and a second connecting arm which are connected to each other, the first connecting arm comprises a first inclined surface, the second connecting arm comprises a clamping edge, the clamping edge is formed by extending the first inclined surface downward in a direction parallel to the key body, the first inclined surface abuts against the limiting structure, and the clamping edge clamps the limiting structure.

13. The camera body as claimed in claim 11, wherein the limiting structure comprises a bracket, a post and a shaft, the bracket comprises a first supporting part, the post and the shaft are arranged at two opposite sides of the first supporting part, a mounting column is formed in the second assembly hole, stepped surfaces are formed at two sides of the mounting column, the second elastic member is sheathed on the shaft and abuts between the first supporting part and the stepped surface, and the mounting column is provided with a via hole through which the shaft passes,
wherein further preferably:
the bracket comprises a second supporting part, the upper part of the second supporting part inwardly forms two limiting ends and a support end, the first elastic member abuts between the key body and the support end, said limiting end comprises an upper boss and a lower boss which are arranged oppositely, said lower boss forms a second inclined surface, said first inclined surface abuts against the second inclined surface, said snapping part passes through said limiting end, and said clamping edge clamps said lower boss.

14. A camera comprising a lens and a camera body according to one of the claims 8 to 13.

15. The camera as claimed in claim 14, wherein said lens comprises a lens cone, the bottom end of said lens cone is provided with an assembly part, and said snapping bodies are arranged apart from each other on the outer wall of said assembly part.

## Patentansprüche

1. Linsenbegrenzungsanordnung (100) zum Begrenzen einer Linse, die auf einer Außenseite davon mit einem Rastkörper (314) versehen ist, wobei die Linsenbegrenzungsanordnung (100) Folgendes umfasst:
ein elastisches Element (10) und
einen Linsenanordnungsring (20), der am elastischen Element (10) angeordnet ist, wobei der Rastkörper (314) unter dem elastische Element (10) einrastet, wenn die Linse in den Linsenanordnungsring (20) eingebaut wird;
**dadurch gekennzeichnet, dass** die Linsenbegrenzungsanordnung (100) ferner Folgendes umfasst:
einen Verriegelungsring (30), der drehbar außerhalb des Linsenanordnungsrings (20) angeordnet ist, wobei der Verriegelungsring (30) gegen das elastische Element (10) stößt und dagegen drückt, wenn sich der Verriegelungsring (30) in eine Richtung dreht, derart, dass das elastische Element (10) gegen den Rastkörper (314) der Linse drückt, um die Linse zu verriegeln.

2. Linsenbegrenzungsanordnung (100) nach Anspruch 1, wobei das elastische Element (10) ein ringförmiges Federstück ist, wobei das elastische Element (10) einen elastischen Körper und einen elastischen Arm umfasst, wobei der elastische Arm durch Erstrecken einer Innenseite des elastischen Körpers entlang einer Achse des elastischen Körpers nach unten gebildet wird und der Verriegelungsring (30) einen Flansch umfasst, der gegen den elastischen Arm stößt.

3. Linsenbegrenzungsanordnung (100) nach Anspruch 2, wobei der elastische Arm ein erstes Ende und ein zweites Ende umfasst, eine Position des ersten Endes in der Richtung der Achse des elastischen Körpers höher ist als eine Position des zweiten Endes in der Richtung der Achse des elastischen Körpers, derart, dass zwischen dem elastischen Arm und dem elastischen Körper ein Spalt gebildet ist und der Flansch in den Spalt aufgenommen ist.

4. Linsenbegrenzungsanordnung (100) nach Anspruch 2, wobei der Verriegelungsring (30) einen Körper und einen Haken, der vom Körper nach innen vorsteht, umfasst, der Haken einen Verbindungsteil und einen gebogenen Teil umfasst, der Verbindungsteil mit einer Innenwand des Körpers verbunden ist, der Linsenanordnungsring (20) eine Aufnahmenut umfasst, der Verbindungsteil und der gebogene Teil in die Aufnahmenut aufgenommen sind, ein Ende des gebogenen Teils mit dem Verbindungsteil verbunden ist, das andere Ende davon sich gerade erstreckt und der Flansch an einem hinteren Ende des gebogenen Teils gebildet ist und sich zum elastischen Arm hin erstreckt,
ferner wobei vorzugsweise:
eine Seite des Flansches, die dem Verbindungsteil zugewandt ist, eine geneigte Fläche bildet, die den Flansch und den gebogenen Teil verbindet.

5. Linsenbegrenzungsanordnung (100) nach Anspruch 1, wobei der Linsenanordnungsring (20) eine erste Passseite umfasst und die erste Passseite an einer Stirnseite des Linsenanordnungsrings (20), die dem elastischen Element (10) zugewandt ist, angeordnet ist und in eine Umfangsrichtung des Linsenanordnungsrings (20) geneigt ist.

6. Linsenbegrenzungsanordnung (100) nach Anspruch 5, wobei die Stirnseite des Linsenanordnungsrings (20) ferner mit einer Einbindungsnut versehen ist, die mit der ersten Passseite verbunden ist, der Linsenanordnungsring (20) im Verriegelungsring (30) aufgenommen ist, der Verriegelungsring (30) einen Haken umfasst, der Haken sich von der Innenseite des Verriegelungsrings (30) erstreckt und in die Einbindungsnut eingebunden ist, der Linsenanordnungsring (20) eine zweite Passseite umfasst, die gegen die erste Passseite stößt, die zweite Passseite an einem Ende einer Fläche des Hakens, die dem Linsenanordnungsring (20) zugewandt ist, angeordnet ist, die andere Fläche des Hakens gegenüber der zweiten Passseite eine planare Fläche ist und die planare Fläche gegen das elastische Element (10) stößt,
ferner wobei vorzugsweise:
der Haken einen Verbindungsteil, der mit einer Innenseite des Verriegelungsrings (30) verbunden ist, und einen gebogenen Teil, der vom Verbindungsteil weg gebogen ist und sich von diesem erstreckt, die zweite Passseite am Ende der Fläche des gebogenen Teils, die dem Linsenanordnungsring (20) zugewandt ist, angeordnet ist und die planare Fläche auf der anderen Fläche des gebogenen Teils gegenüber der zweiten Passseite angeordnet ist.

7. Linsenbegrenzungsanordnung (100) nach Anspruch 1, wobei der Linsenanordnungsring (20) einen Begrenzungsteil umfasst, die linke und die rechte Seite des Begrenzungsteils glatte Flächen sind, derart, dass die Linse angepasst ist, sich zu drehen, nachdem die Linse von der glatten Fläche in den Linsenanordnungsring (20) geglitten ist, um den Rastkörper (314) in eine Position unter dem Begrenzungsteil und dem elastischen Element (10) zu bewegen.

8. Kamerakörper, der einen Befestigungsrahmen und eine Linsenbegrenzungsanordnung (100) gemäß einem der vorhergehenden Ansprüche umfasst, wobei der Befestigungsrahmen eine Kontaktbasismontageposition aufweist, wobei die Linsenbegrenzungsanordnung (100) in der Kontaktbasismontageposition angeordnet ist, wobei die Linsenbegrenzungsanordnung (100) verwendet wird, um eine Linse zu begrenzen, und wobei die Linse mit einem Rastkörper (314) auf der Außenseite davon versehen ist.

9. Kamerakörper nach Anspruch 8, wobei der Linsenanordnungsring (20) eine Vielzahl von Begrenzungsteilen umfasst, die voneinander beabstandet sind, ein Montageteil zwischen zwei benachbarten Begrenzungsteilen gebildet ist und der Rastkörper (314) via den Montageteil in den Linsenanordnungsring (20) eintritt und unter dem Begrenzungsteil einrastet.

10. Kamerakörper nach Anspruch 8, wobei der Befestigungsrahmen mit einem Positionierungsstift und einer Vielzahl von Bolzen versehen ist, wobei das elastische Element (10) mit einem ersten Positionierungsloch versehen ist, der Linsenanordnungsring (20) eine erste Stirnseite und eine zweite Stirnseite, die gegenüber angeordnet sind, aufweist, die erste Stirnseite mit einem zweiten Positionierungsloch versehen ist, der Positionierungsstift durch das erste Positionierungsloch und das zweite Positionierungsloch geführt wird, die zweite Stirnseite mit einer Vielzahl von Bolzenlöchern versehen ist und die Bolzen entsprechend durch die Bolzenlöcher geführt werden,
ferner wobei vorzugsweise:
der Befestigungsrahmen ferner eine Begrenzungsstruktur umfasst, das elastische Element (10) mit einer Rastöffnung versehen ist, die Begrenzungsstruktur in die Rastöffnung geschachtelt und eingerastet ist, der Linsenanordnungsring (20) ferner mit einem Zusammenbauloch versehen ist, das durch die erste Stirnseite und die zweite Stirnseite dringt, und die Begrenzungsstruktur einen Begrenzungsansatz umfasst, der durch das Zusammenbauloch geführt wird, um die Linse zu positionieren.

11. Kamerakörper nach Anspruch 8, wobei ein erstes Zusammenbauloch an einer Außenwand des Befestigungsrahmens nach innen vorgesehen ist, ein zweites Zusammenbauloch auf einer Seite des Linsenanordnungsrings (20), die der Linse zugewandt ist, bereitgestellt ist, das erste Zusammenbauloch und das zweite Zusammenbauloch miteinander in Kommunikation stehen, die Begrenzungsstruktur ferner eine Drucktaste, eine erste elastische Komponente und eine zweite elastische Komponente umfasst, der Druckknopf und die erste elastische Komponente durch das erste Zusammenbauloch geführt werden und der Begrenzungsansatz und das zweite elastische Element durch das zweite Zusammenbauloch geführt werden.

12. Kamerakörper nach Anspruch 11, wobei die Drucktaste einen Tastenkörper und zwei Rastteile, die voneinander beabstandet sind und vom Tastenkörper vorstehen, umfasst jedes der Rastteile einen ersten Verbindungsarm und einen zweiten Verbindungsarm, die miteinander verbunden sind, umfasst, der erste Verbindungsarm eine erste geneigte Fläche umfasst, der zweite Verbindungsarm eine Klemmkante umfasst, die Klemmkante durch Erstrecken der ersten geneigten Fläche nach unten in eine Richtung parallel zum Tastenkörper gebildet ist, die erste geneigte Fläche gegen die Begrenzungsstruktur stößt und die Klemmkante die Begrenzungsstruktur klemmt.

13. Kamerakörper nach Anspruch 11, wobei die Begrenzungsstruktur eine Halterung, einen Pfosten und eine Welle umfasst, die Halterung einen ersten Stützteil umfasst, der Pfosten und die Welle auf gegenüberliegenden Seiten des ersten Stützteils angeordnet sind, eine Montagesäule im zweiten Zusammenbauloch gebildet ist, auf zwei Seiten der Montagesäule gestufte Flächen gebildet sind, die zweite elastische Komponente auf der Welle ummantelt ist und zwischen dem ersten Stützteil und der gestuften Fläche anstößt und die Montagesäule mit einem Durchgangsloch, durch das die Welle geführt wird, versehen ist,
ferner wobei vorzugsweise:
die Halterung einen zweiten Stützteil umfasst, der obere Teil des Stützteils nach innen zwei Begrenzungsenden und ein Stützende bildet, die erste elastische Komponente zwischen dem Tastenkörper und dem Stützende anstößt, das Begrenzungsende einen oberen Ansatz und einen unteren Ansatz, die gegenüber angeordnet sind, umfasst, der untere Ansatz eine zweite geneigte Fläche bildet, die erste geneigte Fläche gegen die zweite geneigte Fläche stößt, der Rastteil durch das Begrenzungsende geführt wird und die Klemmkante den unteren Ansatz klemmt.

14. Kamera, die eine Linse und einen Kamerakörper gemäß einem der Ansprüche 8 bis 13 umfasst.

15. Kamera nach Anspruch 14, wobei die Linse einen Linsenkonus umfasst, das untere Ende des Linsenkonus mit einem Zusammenbauteil versehen ist und die Rastkörper an der Außenwand des Zusammenbauteils voneinander beabstandet angeordnet sind.

## Revendications

1. Ensemble de limitation de lentille (100) pour limiter une lentille qui est prévue avec un corps d'encliquetage (314) sur son côté externe, ledit ensemble de limitation de lentille (100) comprenant :
un élément élastique (10) ; et
une bague d'assemblage de lentille (20) qui est agencée sur ledit élément élastique (10), dans lequel ledit corps d'encliquetage (314) est encliqueté sous l'élément élastique (10) lorsque ladite lentille est assemblée dans ladite bague d'assemblage de lentille (20) ;
**caractérisé en ce que** ledit ensemble de limitation de lentille (100) comprend en outre :
une bague de verrouillage (30) qui est agencée en rotation à l'extérieur de la bague d'assemblage de lentille (20), dans lequel la bague de verrouillage (30) vient en butée contre et comprime ledit élément de élastique (10) lorsque ladite bague de verrouillage (30) tourne dans une direction, de sorte que ledit élément élastique (10) comprime le corps d'encliquetage (314) de ladite lentille afin de verrouiller la lentille.

2. Ensemble de limitation de lentille (100) selon la revendication 1, dans lequel ledit élément élastique (10) est une pièce de ressort annulaire, ledit élément élastique (10) comprend un corps élastique et un bras élastique, ledit bras élastique est formé en étendant un côté interne dudit corps élastique vers le bas le long d'un axe dudit corps élastique, et ladite bague de verrouillage (30) comprend une bride qui vient en butée contre ledit bras élastique.

3. Ensemble de limitation de lentille (100) selon la revendication 2, dans lequel ledit bras élastique comprend une première extrémité et une seconde extrémité, une position de ladite première extrémité dans la direction de l'arbre d'entrée dudit corps élastique est plus haute qu'une position de ladite seconde extrémité dans la direction de l'axe dudit corps élastique de sorte qu'un espace est formé entre ledit bras élastique et ledit corps élastique, et ladite bride est logée dans ledit espace.

4. Ensemble de limitation de lentille (100) selon la revendication 2, dans lequel ladite bague de verrouillage (30) comprend un corps et un crochet qui fait saillie dudit corps vers l'intérieur, ledit crochet comprend une partie de raccordement et une partie pliée, ladite partie de raccordement est raccordée à une paroi interne dudit corps, ladite bague d'assemblage de lentille (20) comprend une rainure de logement, ladite partie de raccordement et ladite partie pliée sont logées dans ladite rainure de logement, une extrémité de ladite partie pliée est raccordée à ladite partie de raccordement, son autre extrémité s'étend tout droit, et ladite bride est formée au niveau d'une extrémité de queue de ladite partie pliée et s'étend vers ledit bras élastique,
dans lequel en outre de préférence :
un côté de ladite bride faisant face à ladite partie de raccordement forme une surface inclinée qui raccorde ladite bride à ladite partie pliée.

5. Ensemble de limitation de lentille (100) selon la revendication 1, dans lequel ladite bague d'assemblage de lentille (20) comprend une première face de montage, et ladite première face de montage est agencée sur une face d'extrémité de ladite bague d'assemblage de lentille (20) faisant face audit élément élastique (10) et est inclinée dans une direction circonférentielle de ladite bague d'assemblage de lentille (20).

6. Ensemble de limitation de lentille (100) selon la revendication 5, dans lequel la face d'extrémité de ladite bague d'assemblage de lentille (20) est en outre prévue avec une rainure de réception raccordée à ladite première face de montage, ladite bague d'assemblage de lentille (20) est logée dans ladite bague de verrouillage (30), ladite bague de verrouillage (30) comprend un crochet, ledit crochet s'étend à partir du côté interne de ladite bague de verrouillage (30) et est reçu dans ladite rainure de réception, ladite bague d'assemblage de lentille (20) comprend une seconde face de montage qui vient en butée contre ladite première face de montage, ladite seconde face de montage est agencée au niveau d'une extrémité d'une surface dudit crochet faisant face à ladite bague d'assemblage de lentille (20), l'autre surface dudit crochet opposée à ladite seconde face de montage est une surface planaire, et ladite surface planaire vient en butée contre ledit élément élastique (10), dans lequel en outre de préférence :
ledit crochet comprend une partie de raccordement raccordée à un côté interne de ladite bague de verrouillage (30) et une partie pliée se pliant et s'étendant à partir de ladite partie de raccordement, ladite seconde face de montage est agencée au niveau de l'extrémité de la surface de ladite partie pliée faisant face à ladite bague d'assemblage de lentille (20) et ladite surface planaire est agencée sur l'autre surface de ladite partie pliée opposée à ladite seconde face de montage.

7. Ensemble de limitation de lentille (100) selon la revendication 1, dans lequel ladite bague d'assemblage de lentille (20) comprend une partie de limitation, les côtés gauche et droit de ladite partie de limitation sont des surfaces lisses, de sorte que ladite lentille est adaptée pour tourner après que ladite lentille a coulissé de ladite surface lisse dans ladite bague d'assemblage de lentille (20), afin de faire passer ledit corps d'encliquetage (314) dans une position au-dessous de ladite partie de limitation et dudit élément élastique (10).

8. Corps de caméra comprenant un bâti de fixation et un ensemble de limitation de lentille (100) selon l'une quelconque des revendications précédentes, ledit bâti de fixation ayant une position de montage de base de contact, ledit ensemble de limitation de lentille (100) étant agencé dans ladite position de montage de base de contact, ledit ensemble de limitation de lentille (100) étant utilisé pour limiter une lentille, et ladite lentille étant prévue avec un corps d'encliquetage (314) sur son côté externe.

9. Corps de caméra selon la revendication 8, dans lequel ladite bague d'assemblage de lentille (20) comprend une pluralité de parties de limitation espacées les unes des autres, une partie de montage est formée entre deux parties de limitation adjacentes, et ledit corps d'encliquetage (314) pénètre dans ladite bague d'assemblage de lentille (20) via ladite partie de montage et est encliquetée au-dessous de ladite partie de limitation.

10. Corps de caméra selon la revendication 8, dans lequel ledit bâti de fixation est prévu avec une broche de positionnement et une pluralité de boulons, ledit élément élastique (10) est prévu avec un premier trou de positionnement, ladite bague d'assemblage de lentille (20) comprend une première face d'extrémité et une seconde face d'extrémité qui sont agencées à l'opposé, ladite première face d'extrémité est prévue avec un second trou de positionnement, ladite broche de positionnement passe à travers ledit premier trou de positionnement et ledit second trou de positionnement, ladite seconde face d'extrémité est prévue avec une pluralité de trous de boulon, et lesdits boulons passent de manière correspondante à travers lesdits trous de boulon,
dans lequel en outre de préférence :
ledit bâti de fixation comprend en outre une structure de limitation, ledit élément élastique (10) est prévu avec une ouverture d'encliquetage, ladite structure de limitation est emboîtée et encliquetée avec ladite ouverture d'encliquetage, ladite bague d'assemblage de lentille (20) est en outre prévue avec un trou d'assemblage pénétrant à travers ladite première face d'extrémité et ladite seconde face d'extrémité, et ladite structure de limitation comprend un bossage de limitation qui passe à travers ledit trou d'assemblage pour positionner ladite lentille.

11. Corps de caméra selon la revendication 8, dans lequel un premier trou d'assemblage est prévu vers l'intérieur sur une paroi externe du bâti de fixation, un second trou d'assemblage est prévu sur un côté de la bague d'assemblage de lentille (20) faisant face à la lentille, le premier trou d'assemblage et le second trou d'assemblage sont en communication entre eux, la structure de limitation comprend une touche de pression, un premier élément élastique et un second élément élastique, la touche de pression et le premier élément élastique passent à travers le premier trou d'assemblage, et le bossage de limitation et le second élément élastique passent à travers le second trou d'assemblage.

12. Corps de caméra selon la revendication 11, dans lequel la touche de pression comprend un corps de touche et deux parties d'encliquetage espacées l'une de l'autre et faisant saillie du corps de touche, chacune desdites parties d'encliquetage comprend un premier bras de raccordement et un second bras de raccordement qui sont raccordés entre eux, le premier bras de raccordement comprend une première surface inclinée, le second bras de raccordement comprend un bord de serrage, le bord de serrage est formé en étendant la première surface inclinée vers le bas dans une direction parallèle au corps de touche, la première surface inclinée vient en butée contre la structure de limitation, et le bord de serrage serre la structure de limitation.

13. Corps de caméra selon la revendication 11, dans lequel la structure de limitation comprend un support, un montant et un arbre, le support comprend une première partie de support, le montant et l'arbre sont agencés au niveau des deux côtés opposés de la première partie de support, une colonne de montage est formée dans le second trou d'assemblage, des surfaces étagées sont formées au niveau des deux côtés de la colonne de montage, le second élément élastique est gainé sur l'arbre et vient en butée entre la première partie de support et la surface étagée, et la colonne de montage est prévue avec un trou débouchant à travers lequel passe l'arbre,
dans lequel en outre de préférence :
le support comprend une seconde partie de support, la partie supérieure de la seconde partie de support forme vers l'intérieur deux extrémités de limitation et une extrémité de support, le premier élément élastique vient en butée entre le corps de touche et l'extrémité de support, ladite extrémité de limitation comprend un bossage supérieur et un bossage inférieur qui sont agencés à l'opposé, ledit bossage inférieur forme une seconde surface inclinée, ladite première surface inclinée vient en butée contre la seconde surface inclinée, ladite partie d'encliquetage passe à travers ladite extrémité de limitation, et ledit bord de serrage serre ledit bossage inférieur.

14. Caméra comprenant une lentille et un corps de caméra selon l'une quelconque des revendications 8 à 13.

15. Caméra selon la revendication 14, dans laquelle ladite lentille comprend un cône de lentille, l'extrémité inférieure dudit cône de lentille est prévue avec une partie d'assemblage, et lesdits corps d'encliquetage sont agencés à distance les uns des autres sur la paroi externe de ladite partie d'assemblage.
